# EUROPÄISCHE PATENTSCHRIFT

(11) **EP 3 544 022 B1**
(45) Veröffentlichungstag und Bekanntmachung des Hinweises auf die Patenterteilung: **17.02.2021**
(21) Anmeldenummer: 19160477.6
(22) Anmeldetag: 04.03.2019
(51) Int. Cl.: G21C 19/02, G21D 1/00, G21F 9/28, G21F 9/30

(54) **VERFAHREN ZUM ENTFERNEN EINES BEHÄLTERS**
METHOD FOR REMOVING A CONTAINER
PROCÉDÉ DE RETRAIT D'UN RÉCIPIENT

(30) Priorität: 22.03.2018 DE 102018106838
(43) Veröffentlichungstag der Anmeldung: 25.09.2019
(73) Patentinhaber: Nukem Technologies Engineering Services GmbH, 63755 Alzenau (DE)
(72) Erfinder: BIENIA, Harald, 63500 Seligenstadt (DE); EMGE, Tobias, 63755 Alzenau (DE); MENDYK, Christoph, 37603 Holzminden (DE)
(74) Vertreter: Stoffregen, Hans-Herbert

(56) Entgegenhaltungen:
- EP-A1- 0 248 286
- EP-A1- 1 258 889
- WO-A1-2016/183388

## Beschreibung

Die Erfindung bezieht sich auf ein Verfahren zum Entfernen eines einen Behältermantel und einen Boden, wie Bodenkalotte, aufweisenden Behälters aus einem Raum, wie einer Grube, Kaverne oder Ähnliches, durch Zerlegen des Behältermantels in mehrere Segmente und Entfernen aus dem Raum mittels eines Hebewerkzeugs, wie Kran, wobei der Behälter mittels über der Umfangswandung vorstehende Halteelemente, wie Tragpratzen, hängend in dem Raum positioniert ist.

Im Zusammenhang mit der Stilllegung und einem anschließenden Rückbau von Kernkraftwerken ist es erforderlich, das Inventar zu zerlegen. Hierzu gehört auch der Reaktordruckbehälter, der z.B. bei Druckwasserreaktoren hängend in einer Reaktorgrube positioniert sein kann. Hierzu gehen von der Umfangsfläche des Behältermantels Halteelemente, sogenannte Tragpratzen aus, die auf dem Rand des Raums wie Grubenrand, Ringträger, Abstützeinrichtung o. Ä. aufliegen und gegebenenfalls dort verankert sind.

Um einen entsprechenden Behälter zu zerlegen, muss dieser aus dem Raum - nachstehend als Grube bezeichnet - herausgezogen werden. Hierzu können verschiedene Methoden zur Anwendung gelangen. So besteht die Möglichkeit, den Behälter als Einheit aus der Grube herauszuziehen. Da jedoch die Masse des Behälters üblicherweise größer als die Tragfähigkeit der zum Einsatz gelangenden und in dem Reaktor vorhandenen Kräne, wie Brückenkräne, ist, sind aufwendige Ertüchtigungsmaßnahmen erforderlich, um den Behälter anzuheben und z. B. zu einem Nachzerlegungsbereich zu transportieren.

Es besteht auch die Möglichkeit, den Behälter zu segmentieren, d. h. in ringförmige Abschnitte zu zerlegen. Hierdurch bedingt geht nach dem Entfernen des obersten bzw. der oberen Mantelringabschnitte die Aufhängung des Behälters verloren mit der Folge, dass dieser bodenseitig abgestützt werden muss. Dies erfordert erhebliche konstruktive Maßnahmen, insbesondere dann, wenn im Bodenbereich bauseits keine Öffnung vorhanden ist oder nur begrenzte Zugänge existieren, welche die Durchführung von Maßnahmen erschwert, so dass z.B. die vorhandenen Betonwände durchstoßen werden müssen.

Verfahren zur Zerlegung von Reaktordruckbehältern sind aus den Druckschriften WO 2016/183388 A1 und EP 0 248 286 A1 bekannt.

Der vorliegenden Erfindung liegt die Aufgabe zugrunde, ein Verfahren der eingangs genannten Art so weiterzubilden, dass mit konstruktiv einfachen Maßnahmen der Behälter aus der Grube entfernt werden kann, ohne dass z. B. Maßnahmen an dem Hebewerkzeug durchgeführt werden müssen.

Zur Lösung der Aufgabe wird im Wesentlichen vorgeschlagen, dass der Behälter unterstützungsfrei bei hängender Positionierung und durch in Längsrichtung des Behälters verlaufende Trennschnitte segmentiert wird.

Abweichend vom Stand der Technik werden Abschnitte, also Segmente, des Behälters insbesondere vollständig am Umfang herausgeschnitten, ohne dass die Aufhängung des Behälters beseitigt wird. Ferner erfolgt ein Segmentieren in einem Umfang, dass die verbleibende Masse des Restbehälters gleich oder kleiner als die Tragfähigkeit des Hebewerkzeugs, wie Brückenkrans, ist, und die daraus resultierende Belastung der nach dem Segmentieren noch vorhandenen Tragpratzen gleich oder kleiner der zulässigen Belastung der Tragpratzen ist.

Es werden in Längsrichtung des Behälters verlaufende Mantelabschnitte herausgetrennt, wobei insbesondere vorgesehen ist, dass ein zu entfernendes Segment durch vom oberen Rand des Behälters bis z.B. zum mittleren Bereich der Umfangswandung oder vorzugsweise bis hin zum Bodenbereich verlaufende erste Trennschnitte und einen die ersten Trennschnitte oberhalb des Bodens verbindenden zweiten Trennschnitt begrenzt wird. Oberhalb des Bodens bedeutet grundsätzlich, dass der zweite Trennschnitt sowohl im Bereich der Umfangswandung oder direkt unmittelbar oberhalb des Bodens verläuft.

Es werden Mantelsegmente herausgetrennt, die sich insbesondere über die gesamte Höhe des Behälters erstrecken und problemlos mit dem Hebewerkzeug angehoben und sodann insbesondere zu einem Nachzerlegungsbereich oder Transport- oder Endlagercontainer transportiert werden können.

Bevorzugterweise ist vorgesehen, dass nach Entfernen des oder der Segmente verbleibender Behälterrest aus dem Boden und zumindest zwei von diesem ausgehenden streifenförmigen Mantelabschnitten besteht, die jeweils ein Halteelement aufweisen, über die der Behälter weiterhin hängend in der Grube positioniert ist. Insbesondere sollte ein Segmentieren derart erfolgen, dass der Behälterrest über mindestens zwei, idealerweise über drei äquidistant zueinander verlaufende Halteelemente hängend positioniert ist.

Nach Entfernen der Segmente wird der Behälterrest bestehend aus dem Boden und den Halteelemente aufweisenden streifenförmigen Mantelabschnitten als Einheit aus der Grube herausgezogen.

Die Erfindung bezieht sich auch auf ein Verfahren zum Rückbau eines Reaktors, wie Druckwasserreaktors, wobei im Reaktor vorhandener Reaktordruckbehälter entsprechend einem oder mehrerer zuvor beschriebener Merkmale segmentiert, aus einer Reaktorgrube entfernt und einem Nachzerlegungsbereich oder Transport- oder Endlagercontainer zugeführt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:

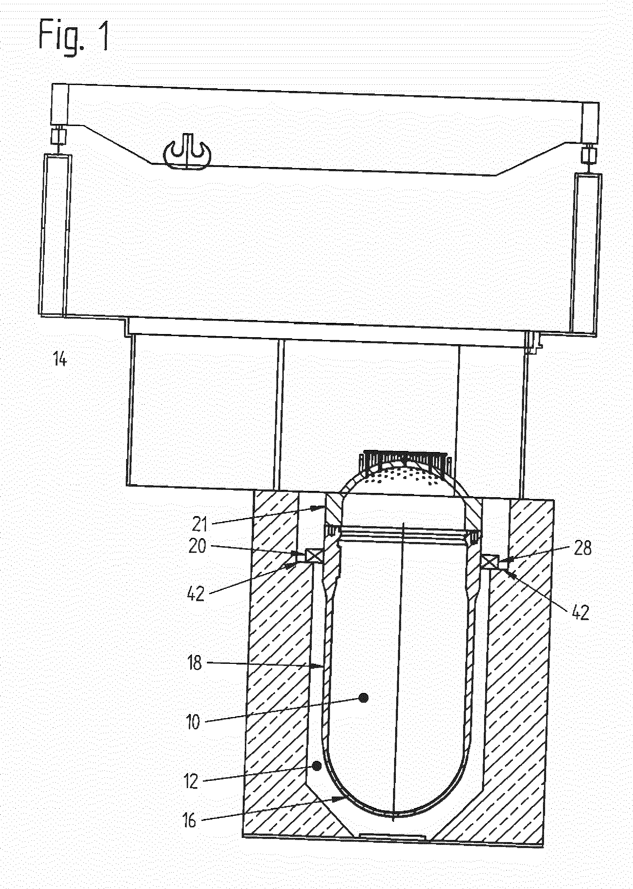

- Fig 1: einen Schnitt durch einen Druckwasserreaktor,
- Fig. 2: eine Prinzipdarstellung eines segmentierten Reaktordruckbehälters,
- Fig. 3: einen Ausschnitt des Reaktors mit teilweise segmentiertem Behälter,
- Fig. 4 bis 5: Fortschritt des Segmentierens des Behälters und
- Fig. 6 und 7: weitere Ausschnitte aus dem Reaktor mit einem Nachzerlegungsbereich zuzuführendem Behälterrest.

Anhand der Figuren, in denen grundsätzlich gleiche Elemente mit gleichen Bezugszeichen versehen sind, soll das erfindungsgemäße Verfahren erläutert werden, mit dem ein Reaktordruckbehälter 10 aus einer Aufnahme bzw. einem Raum, nachstehend als Grube 12 bezeichnet, eines Reaktors, wie Druckwasserreaktor, entfernt, d.h. nach oben herausgezogen werden soll, um zu einem innerhalb des Reaktors vorhandenen Bereich transportiert zu werden, bei dem es sich im Ausführungsbeispiel um einen Nachzerlegungsbereich 15 handelt. Der Behälter 10 weist einen Boden 16 und eine einen Mantel bildende Umfangswandung 18 auf und ist mit einem Deckel 21 verschlossen, der zunächst entfernt und wegtransportiert wird, bevor entsprechend der Erfindung ein Segmentieren des Behälters 10 erfolgt.

Der Behälter 10 selbst ist hängend in der Grube 12 positioniert. Hierzu gehen vom oberen Randbereich des Behältermantels 18 Halteelemente 20, 22, 24, 26, 28, 30, 32, 34 aus, die auch als Haltepratzen zu bezeichnen sind, die auf dem Rand der Grube 12 oder einer den oberen Rand 43 der Grube 12 umgebenden Abstützeinrichtung o. Ä. aufliegen. Hierdurch erfolgt eine hängende Positionierung des Behälters 10 innerhalb der Grube 12, ohne dass es grundsätzlich weiterer Abstützungen bedarf. Der Behälter 10 verläuft somit grundsätzlich beabstandet zur Innenwandung der Grube 12.

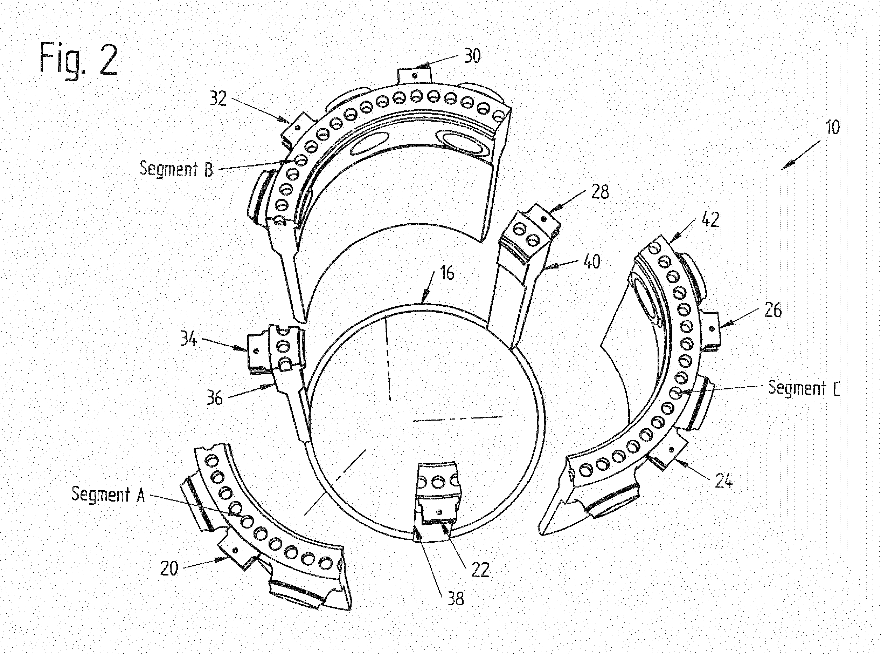

Wie die Explosionsdarstellung der Fig. 2 verdeutlicht, sind die Halteelemente 20, 22, 24, 26, 28, 30, 32, 34 äquidistant um den Umfang des Behälters 10 angeordnet, wobei zwischen zwei Halteelementen jeweils ein Rohranschluss verläuft. Insoweit handelt es sich jedoch um konstruktive Merkmale, die von Druckwasserreaktoren bzw. Reaktordruckbehältern bekannt sind.

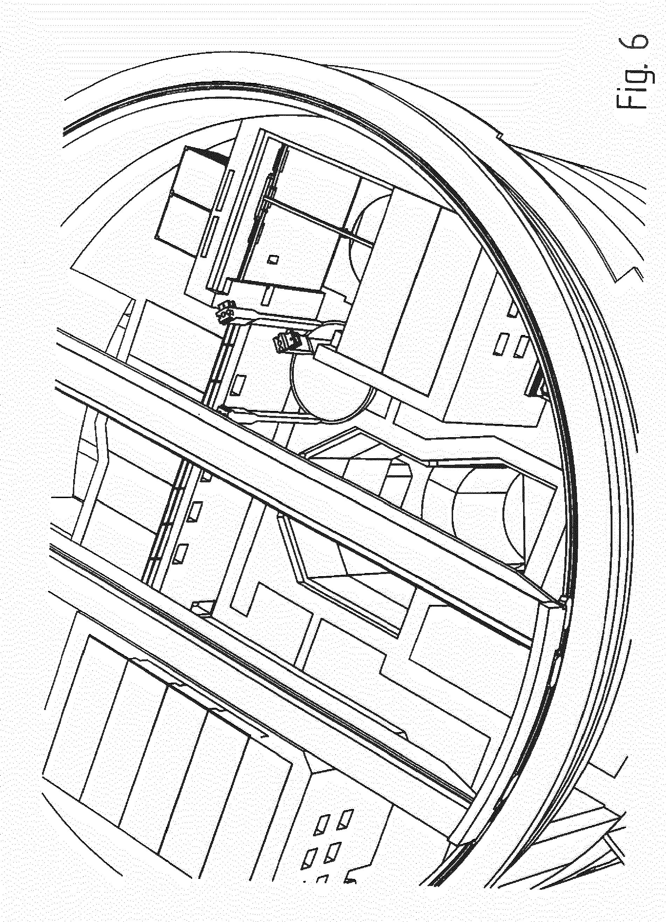

Um den Behälter 10 aus der Grube 12 zu entfernen, wird ein auf die Grube 12 auszurichtendes Hebewerkzeug, wie Kran, benutzt, von dem entsprechend der Fig. 6 die Brückenträger erkennbar sind. Üblicherweise besitzt der Kran eine Tragfähigkeit, die geringer als die Masse des Behälters 10 ist. Um dennoch ohne zusätzliche an dem Kran durchzuführende Maßnahmen den Behälter 10 aus der Grube 12 zu entfernen, erfolgt erfindungsgemäß ein Segmentieren, ohne dass die hängende Positionierung des Behälters 10 bzw. des nach dem Segmentieren noch vorhandenen Behälterrests verloren geht.

Mit anderen Worten wird der Behälter 10 derart Segmentiert, dass nach Entfernen von Segmenten der Behälterrest weiterhin hängend in der Reaktorgrube verbleibt, um sodann - wie nachstehend erläutert - den Behälterrest als Einheit aus der Grube 12 herauszuziehen und - wie im Ausführungsbeispiel - dem Nachzerlegungsbereich 15 zuzuführen.

In dem den Figuren zu entnehmenden Ausführungsbeispiel erfolgt ein Segmentieren dahingehend, dass aus dem Behältermantel 18 drei Segmente A, B, C sukzessiv herausgeschnitten werden, um einzeln aus der Grube 12 angehoben und dem Nachzerlegungsbereich 15 zugeführt zu werden. Dabei erfolgt ein Segmentieren derart, dass Behälterabschnitte 36, 38, 40 mit dem Boden 16 verbunden bleiben, wobei von den als streifenförmig zu bezeichnenden Abschnitten 36, 38, 40 Halteelemente ausgehen, im Ausführungsbeispiel die Halteelemente 22, 28, 34, über die weiterhin die hängende Positionierung erfolgt.

Verlaufen im Ausführungsbeispiel die Segmente über die Höhe der Umfangswandung bis hin zum Boden 16, also enden unmittelbar oberhalb des Bodens 16, so besteht ohne Weiteres auch die Möglichkeit, dass erste Segmente zunächst bis zum Mittenbereich der Umfangswandung 18 verlaufen und sodann verbleibende Bereiche der Umfangswandung entsprechend der erfindungsgemäßen Lehre segmentiert werden.

Zum Heraustrennen der Segmente A, B, C werden vom oberen Rand 42 des Behältermantels in Längsachsenrichtung des Behälters 10 verlaufende Längsschnitte z. B. mittels mechanischen Trennverfahrens, wie z.B. Kreissäge und Bandsäge, oder thermischen Trennverfahrens, wie z.B. autogenen Brennschneidens und Plasmaschneidens, durchgeführt, wobei die Längsschnitte bodenseitig, also oberhalb des Bodens 16 über einen zweiten senkrecht oder im Wesentlichen senkrecht zur Längsachse des Behälters 10 verlaufenden Schnitt verbunden sind, so dass die Segmente A, B, C nacheinander aus dem Mantel 18 des Behälters 10 herausgetrennt werden.

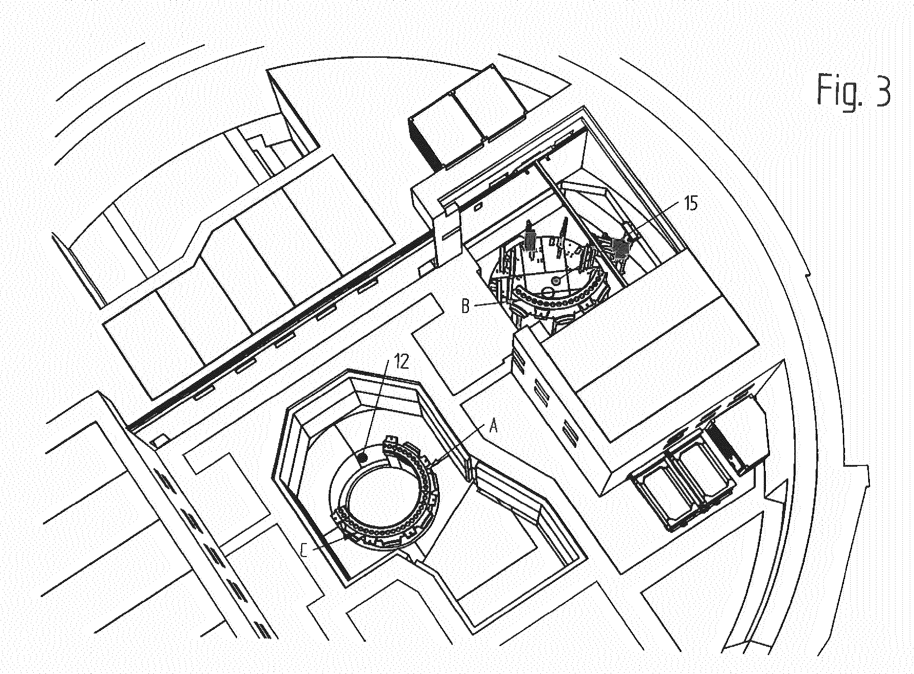

Entsprechend der zeichnerischen Darstellung der Fig. 3 des Ausführungsbeispiels wird zunächst das Segment B herausgeschnitten und zu dem Nachzerlegungsbereich 15 transportiert.

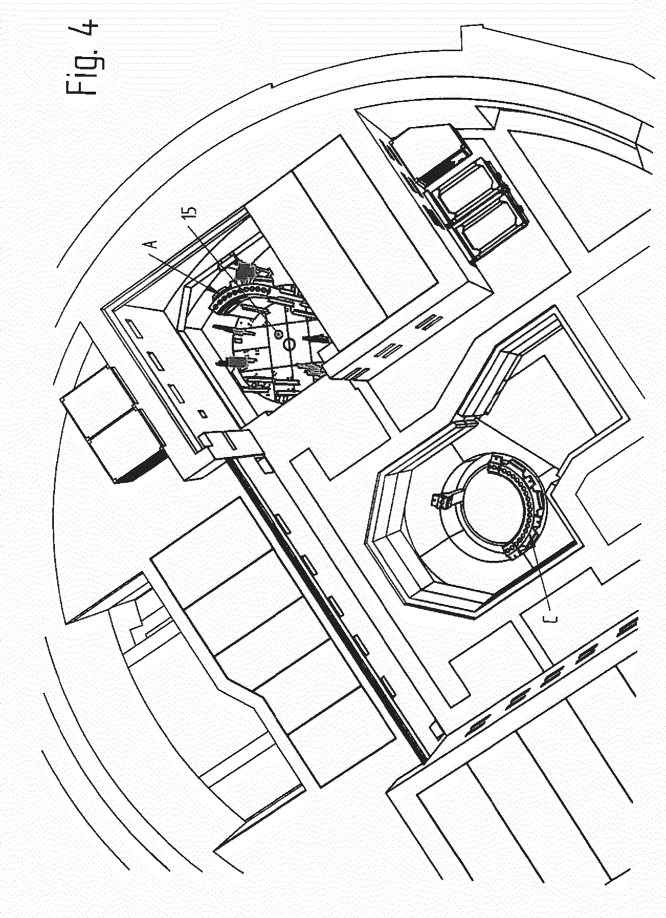

Anschließend wird entsprechend der Fig. 4 das Segment A herausgeschnitten und zu dem Nachzerlegungsbereich 15 gefördert, nachdem zuvor das Segment B zerlegt worden ist, wie sich aus den zeichnerischen Darstellungen ablesen lässt.

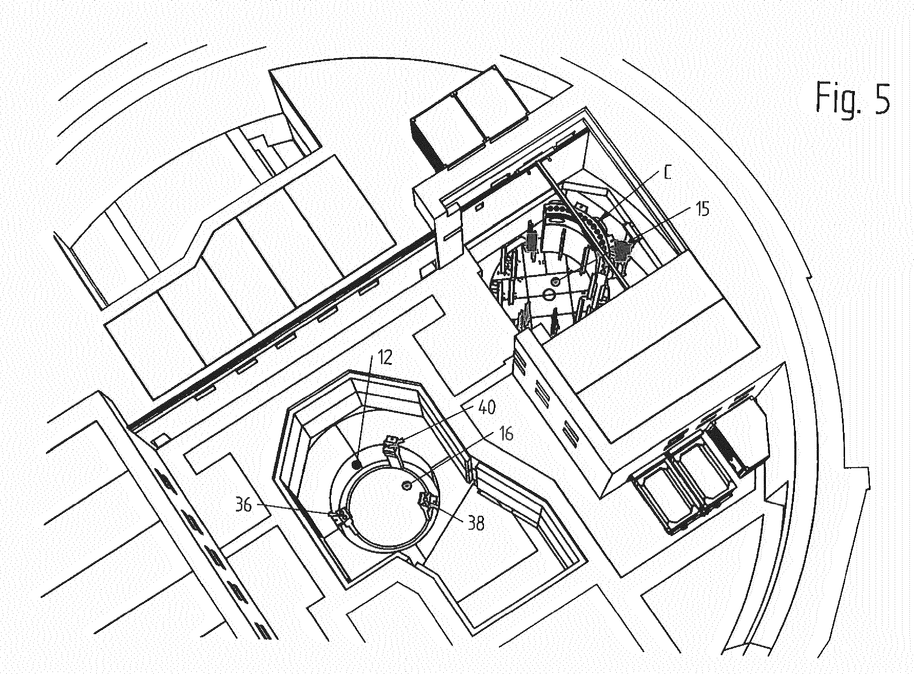

In einem weiteren Verfahrensschritt wird das Segment C herausgeschnitten, wie sich aus der Fig. 5 ergibt.

Somit verbleiben in der Grube 12 der Boden 16 des Behälters 10 sowie die streifen- oder stegförmigen Abschnitte 36, 38, 40 der Behälterwandung mit den Haltepratzen, über die der Behälter 10 und damit auch der jeweilige Behälterrest hängend in der Grube 12 positioniert wird.

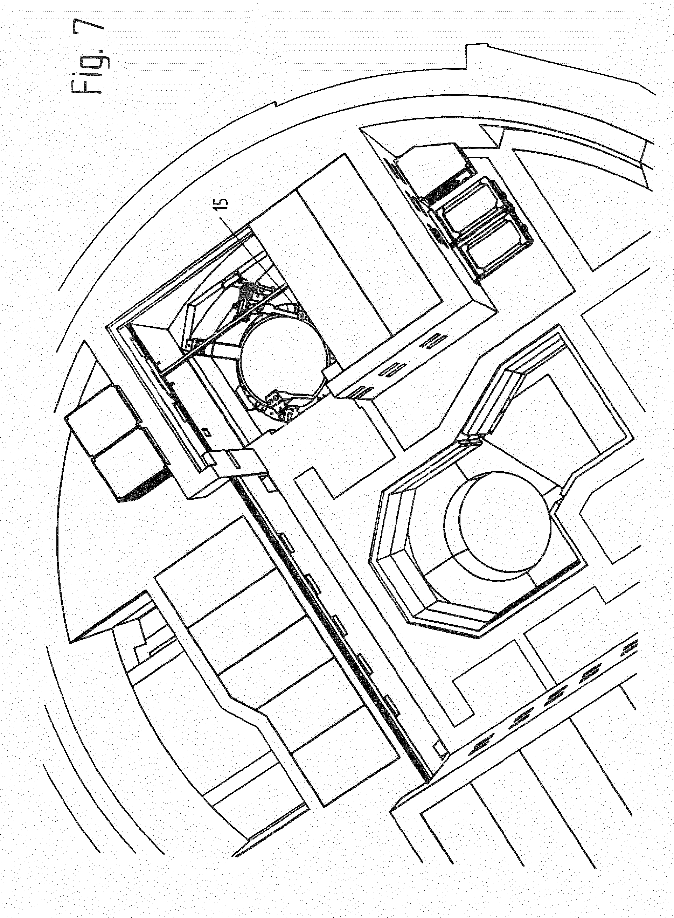

Anschließend wird der entsprechende Behälterrest bestehend aus dem Boden 16 und den stegförmigen Abschnitten 36, 38, 40 als Einheit aus der Grube 12 angehoben und zu dem Nachzerlegungsbereich 15 transportiert, wie sich aus den Fig. 6 und 7 ergibt.

Ist im Ausführungsbeispiel eine Segmentierung derart erfolgt, dass drei Mantelabschnitte, d. h. die Segmente A, B, C herausgetrennt und sodann der Behälterrest aus der Grube 12 entfernt werden, so kann selbstverständlich auch eine hiervon abweichende Anzahl von Segmenten aus dem Behälter 10 herausgeschnitten werden. Diese Segmente verlaufen in Längsrichtung des Behälters 10 derart, dass diese aus dem Behältermantel 18 durch vom oberen Rand 42 ausgehende Längsschnitte und einen entlang des Bodens 16 verlaufenden Querschnitt herausgetrennt werden. Das Trennen kann thermisch, z. B. durch autogenes Brennschneiden, oder mechanisch, z. B. mittels einer Säge, erfolgen.

Auch besteht die Möglichkeit, den Behälter 10 derart zu segmentieren, dass erste Abschnitte bis hin zum Mittenbereich der Umfangswandung und zweite Abschnitte sodann zum Boden 16 verlaufen, der insbesondere zusammen mit den stegförmigen Abschnitten 36, 38, 40 aus der Grube 12 nach oben herausgezogen wird.

Ist der Boden 16 vorzugsweise mit drei streifen- oder stegförmigen Mantelabschnitten weiterhin verbunden, die die Haltepratzen aufweisen, so kann auch eine abweichende Anzahl gewählt werden.

Bevorzugterweise sollten die Haltepratzen äquidistant zueinander verlaufen.

Die Möglichkeit, allein über zwei Haltepratzen den Behälterrest zu positionieren, besteht gleichfalls.

Selbstverständlich wird die Erfindung nicht verlassen, wenn aus der Behälterwandung nur ein Segment herausgeschnitten wird, dessen Masse so groß ist, dass der verbleibende Behälterrest seinerseits eine Masse aufweist, die gleich oder kleiner als die Tragfähigkeit des Hebewerkzeugs ist, mittels dessen die Segmente und der Behälterrest aus der Grube 12 angehoben und wegtransportiert werden können.

Erfindungsgemäß erfolgt ein Segmentieren, wobei Abschnitte aus dem Behälter 10 herausgeschnitten werden, die sich vom oberen Randbereich 42 ausgehend grundsätzlich bis zum Bodenbereich des Behälters 10 erstrecken. Dabei erfolgt grundsätzlich ein Segmentieren derart, dass nach Entfernen der Segmente der Behälterrest vorzugsweise über drei Halteelemente hängend in der Reaktorgrube 12 verbleibt, um sodann den den Behälterboden 16 umfassenden Behälterrest als Einheit aus der Grube 12 herauszuziehen und z.B. einem Nachzerlegungsbereich 15 zuzuführen.

Es erfolgt ein Segmentieren, d.h. ein Entfernen von Behälterabschnitten, die sich über die Höhe des Behälters 10 bei einer unterstützungsfrei hängenden Positionierung des Behälters bzw. Behälterrests erstrecken, wobei der nach dem Segmentieren verbleibende Behälterrest eine Masse aufweist, die gleich oder kleiner als Tragfähigkeit des Hebewerkzeugs, wie Brückenkran, ist. Es bedarf weder einer Unterstützung des Behälters zum Entfernen dieses noch zusätzlicher Ertüchtigungsmaßnahmen des Hebewerkzeugs.

## Patentansprüche

1. Verfahren zum Entfernen eines einen Behältermantel (18) und einen Boden (16), wie Bodenkalotte, aufweisenden Behälters (10) aus einem Raum, wie einer Grube, (12) durch Zerlegen des Behältermantels in Segmente (A, B, C) und Entfernen aus dem Raum mittels eines Hebewerkzeugs, wie Kran, wobei der Behälter mittels über der Umfangswandung vorstehende Halteelemente (20, 22, 24, 26, 28, 30, 32 34), wie Tragpratzen, hängend in dem Raum positioniert ist,
**dadurch gekennzeichnet,**
**dass** der Behälter (10) unterstützungsfrei bei hängender Positionierung durch in Längsachsenrichtung des Behälters verlaufende Trennschnitte segmentiert wird.

2. Verfahren nach Anspruch 1,
**dadurch gekennzeichnet,**
**dass** das zu entfernende zumindest eine Segment (A, B, C) durch vom oberen Rand (42) des Behälters (10) bis vorzugsweise hin zum Bodenbereich verlaufende erste Trennschnitte und einen die ersten Trennschnitte oberhalb des Bodens verbindenden zweiten Trennschnitt begrenzt wird.

3. Verfahren nach zumindest Anspruch 1 oder 2,
**dadurch gekennzeichnet,**
**dass** das Hebewerkzeug, wie Brückenkran, eine Tragfähigkeit x in Tonnen und der Behälter (10) eine Masse von y in Tonnen mit y>x aufweist, und dass der Behälter in einem Umfang segmentiert wird, dass nach Entfernen eines oder mehrere Segmente (A, B, C) verbleibender Restbehälter eine Masse y₁ mit x≥y₁ aufweist.

4. Verfahren nach zumindest einem der vorhergehenden Ansprüche,
**dadurch gekennzeichnet,**
**dass** nach Entfernen des oder der Segmente (A, B, C) verbleibender Behälterrest aus dem Boden (16) und zumindest zwei von diesem ausgehenden streifenförmigen Mantelabschnitten (36, 38, 40) besteht, die jeweils ein Halteelement (22, 28, 34) aufweisen, über die der Behälter (10) weiterhin hängend in der Grube (12) positioniert ist.

5. Verfahren nach Anspruch 4,
**dadurch gekennzeichnet,**
**dass** der Behälterrest als Einheit aus der Grube (12) entfernt wird.

6. Verfahren nach einem der Ansprüche 4 oder 5,
**dadurch gekennzeichnet,**
**dass** der Behälter (10) derart segmentiert wird, dass der Behälterrest über drei äquidistant zueinander verlaufende Halteelemente (22, 28, 34) hängend positioniert ist.

7. Verfahren zum Rückbauen eines Reaktors (14), wie Druckwasserreaktor, wobei in dem Reaktor vorhandener Reaktordruckbehälter (10) nach zumindest einem der Ansprüche 1 bis 6 segmentiert und einem Nachzerlegungsbereich (15) oder einem Transport- oder Endlagercontainer zugeführt wird.

## Claims

1. Method for removing a vessel (10) having a vessel shell (18) and a floor (16) such as a domed floor from a space such as a cavity (12), by dismantling the vessel shell into segments (A, B, C) and removing them from said space by means of a lifting tool such as a crane, the vessel being positioned suspended in the room by means of retaining elements (20, 22, 24, 26, 28, 30, 32 34) such as support brackets protruding beyond the perimeter wall,
wherein
the vessel (10) is segmented free of supports in a suspended position by separating cuts extending in the longitudinal axis direction of the vessel.

2. Method according to claim 1,
wherein
the at least one segment (A, B, C) to be removed is limited by first separating cuts extending from the upper rim (42) of the vessel (10) preferably to the floor area and by a second separating cut connecting the first separating cuts above the floor.

3. Method according to at least claim 1 or 2,
wherein
the lifting tool such as a gantry crane has a loading capacity x in tonnes and the vessel (10) a mass of y in tonnes where y>x, and the vessel is segmented to an extent such that after removal of one or more segments (A, B, C) the remainder of the vessel has a mass yi where x≥y₁.

4. Method according to at least one of the preceding claims,
wherein
after removal of the segment(s) (A, B, C) the remainder of the vessel consists of the floor (16) and at least two strip-like shell sections (36, 38, 40) extending therefrom which each have a retaining element (22, 28, 34) by which the vessel (10) is still positioned suspended in the cavity (12).

5. Method according to claim 4,
wherein
the remainder of the vessel is removed as a unit from the cavity (12).

6. Method according to one of claims 4 or 5,
wherein
the vessel (10) is segmented such that the remainder of the vessel is positioned suspended by three retaining elements (22, 28, 34) extending equidistantly from one another.

7. Method for dismantling a reactor (14) such as a pressurized water reactor, the reactor pressure vessel (10) present in the reactor being segmented according to at least one of claims 1 to 6 and passed to a subsequent dismantling area (15) or to a transport vessel or final storage vessel.

## Revendications

1. Procédé destiné à retirer une cuve (10) présentant une enveloppe (18) et un fond (16), telle qu'une calotte inférieure, d'un espace, tel qu'une fosse (12), en désassemblant l'enveloppe en segments (A, B, C) et en les retirant de l'espace au moyen d'un dispositif de levage, tel qu'une grue, sachant que la cuve est positionnée suspendue dans l'espace au moyen d'éléments de fixation (20, 22, 24, 26, 28, 30, 32, 34), tels que des pattes d'attache, dépassant de la paroi circonférentielle,
**caractérisé en ce**
**que** la cuve (10) est segmentée sans soutien par des coupes de séparation s'étendant en direction de l'axe longitudinal de la cuve, lors d'un positionnement suspendu.

2. Procédé selon la revendication 1,
**caractérisé en ce**
**que** ledit au moins un segment (A, B, C) à retirer est délimité par des premières coupes de séparation s'étendant du bord supérieur (42) de la cuve (10) de préférence jusqu'au fond et par une seconde coupe de séparation reliant les premières coupes de séparation au-dessus du fond.

3. Procédé selon au moins la revendication 1 ou 2,
**caractérisé en ce**
**que** le dispositif de levage, tel qu'un pont roulant, présente une force portante x exprimée en tonnes et que la cuve (10) présente une masse y exprimée en tonnes, sachant que y>x, et que la cuve est segmentée de telle mesure que la cuve restant après retrait d'un ou de plusieurs segments (A, B, C) présente une masse yi, telle que x≥y₁.

4. Procédé selon au moins une des revendications précédentes,
**caractérisé en ce**
**que** le reste de la cuve après le retrait du ou des segments (A, B, C) est constitué du fond (16) et d'au moins deux des sections d'enveloppe (36, 38, 40) en forme de bandes partant de celui-ci, lesquelles sections d'enveloppe présentent chacune un élément de fixation (22, 28, 34) par le biais desquels éléments la cuve (10) continue à être positionnée suspendue dans la fosse (12).

5. Procédé selon la revendication 4,
**caractérisé en ce**
**que** le reste de la cuve est retiré en un seul bloc, de la fosse (12).

6. Procédé selon une des revendications 4 ou 5,
**caractérisé en ce**
**que** la cuve (10) est segmentée de sorte à ce que le reste de la cuve soit positionné suspendu au moyen de trois éléments de fixation (22, 28, 34) s'étendant de manière équidistante les uns vers les autres.

7. Procédé de démantèlement d'un réacteur (14), tel qu'un réacteur à eau sous pression, sachant que la cuve de réacteur (10) présente dans le réacteur est segmentée selon au moins une des revendications 1 à 6 et est amenée vers une zone de démantèlement consécutive (15) ou un conteneur de transport ou de stockage définitif.
